Europäisches Patentamt

European Patent Office

Office européen des brevets

(11) Veröffentlichungsnummer: **0 226 859**
**A1**

(12) # EUROPÄISCHE PATENTANMELDUNG

(21) Anmeldenummer: 86116415.0

(22) Anmeldetag: 26.11.86

(51) Int. Cl.⁴: **B23D 33/00** , //B23D25/12

(30) Priorität: 28.11.85 DE 3541984

(43) Veröffentlichungstag der Anmeldung:
01.07.87 Patentblatt 87/27

(84) Benannte Vertragsstaaten:
AT BE CH DE ES FR GB GR IT LI LU NL SE

(71) Anmelder: **Metallverarbeitung
Breyell-Dinslaken GmbH
Lötscher Weg 61
D-4054 Nettetal 1(DE)**

(72) Erfinder: **Hasenkamp, Friederich
Lobbericher Strasse 70
D-4054 Nettetal 1(DE)**

(74) Vertreter: **Busse & Busse Patentanwälte
Postfach 1226 Grosshandelsring 6
D-4500 Osnabrück(DE)**

(54) Vorrichtung zum Zerkleinern von band- bzw. streifenförmigen Abfällen aus z.B. Stahlblech.

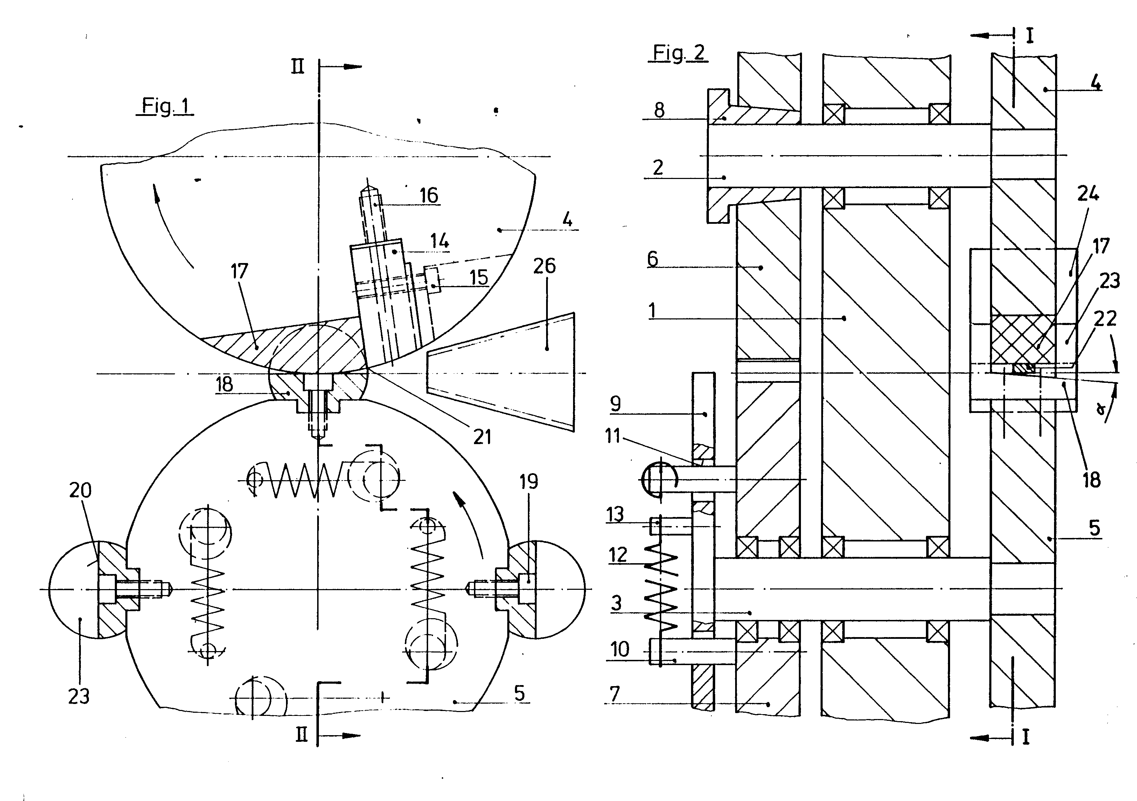

(57) Es handelt sich um eine Vorrichtung zum Zerkleinern von band-bzw. streifenförmigen Abfällen aus z.B. Stahlblech in kurze Abschnitte. Um eine geräuscharme Zerkleinerungsvorrichtung zu erreichen, die überdies bei einfachem Aufbau auch Materialien unterschiedlicher Dicke ohne Umstellung verarbeiten kann, ist vorgesehen, daß sie zwei synchron gegenläufig angetriebene Rotoren (4,5) mit jeweils am Umfang vorstehenden Messern (14,18) aufweist, die beim jeweiligen Zusammentreffen einen Scherenschnitt ausführen, und daß zum Antrieb der auf Wellen (2,3) mit feststehendem Achsabstand verdrehfest angebrachten Messer-Rotoren (4,5) zwei miteinander kämmende Zahnräder (6,7) vorgesehen sind, von denen eines (6) auf der Welle (2) des ersten Rotors - (4) aufsitzt und diese mitnimmt, während das andere (7) auf der dem zweiten Rotor (5) zugehörigen Welle (3) frei drehbar gelagert ist und diese Welle über eine in Drehrichtung federelastisch abgestützte Mitnahmemechanik (9 bis 13) antreibt (Fig. 1 u. 2).

Fig.2

Fig.1

# Vorrichtung zum Zerkleinern von band-bzw. streifenförmigen Abfällen aus z.B. Stahlblech

Die Erfindung betrifft eine Vorrichtung zum Zerkleinern von band-bzw. streifenförmigen Abfällen aus z.B. Stahlblech in kurze Abschnitte. Derartige Abfall-bzw. Schrottstreifen fallen z.B. an bei Spalt-, Besäumungs-, Stanzanlagen od.dgl.

Bisher bekannte Zerkleinerungsvorrichtungen für derartige band-bzw. streifenförmigen Abfälle weisen einen am Umfang mit mehreren Werkzeugen, z.B. vier Messern, bestückten Rotor auf, der mit einem feststehenden Kontermesser zusammenwirkt. Dabei erfolgt das Zerkleinern in die kurzen Abschnitte jeweils durch Abschlagen des Abschnitts vom Streifen bzw. Band, was mit starkem Lärm verbunden ist und deshalb heute vielfach unter dem Gesichtspunkt des Lärmschutzes behördlicherseits nicht mehr zugelassen wird. Man ist in diesen Fällen bereits dazu übergegangen, die als Abfall anfallenden Bänder bzw. Streifen für sich aufzuwickeln und abzubinden und als sog. Schrottcoils abzugeben, was jedoch mit beträchtlichem Aufwand an Vorrichtungen, Handhabung, Lagerung und Transport für die Betriebe verbunden ist, bei denen diese Abfälle anfallen.

Der Erfindung liegt daher in erster Linie die Aufgabe zugrunde, eine geräuscharme Zerkleinerungsvorrichtung für die in Rede stehenden band-bzw. streifenförmigen Abfälle zu schaffen, die überdies bei einfachem Aufbau auch Materialien unterschiedlicher Dicke ohne Umstellung verarbeiten kann.

Hierzu zeichnet sich die erfindungsgemäße Zerkleinerungsvorrichtung aus durch die im Patentanspruch 1 angegebenen Merkmale. Weitere Merkmale und Einzelheiten der Erfindung sind in den Unteransprüchen 2 bis 10 angeführt.

Die Zerkleinerungsvorrichtung nach der Erfindung arbeitet dadurch, daß kein Abhacken bzw. Abschlagen mehr erfolgt, sondern ein Abscheren mittels Scherenschnitts vorgenommen wird, sehr leise. Mittels der vorteilhafterweise vorgesehenen Niederhaltekissen kann ein fast lautloses Abarbeiten erreicht werden. Es bedarf keines Umstellens der Messer für verschiedene Materialstärken, z.B. von 0,5 bis zu 5 mm, da sich der Schnittspalt selbsttätig auf die jeweilige Bandstärke bzw. -dicke einstellt. Im übrigen ergibt sich dadurch, daß die Messer gegeneinander abrollen und einen Scherenschnitt ausführen, ein gegenseitiges Anschärfen der Messer und damit eine hohe Messer-Standzeit. Im übrigen ist ein einfacher Messerwechsel und ein einfaches Nachschleifen (Rundschleifmaschine) möglich. Es bedarf auch keiner Einzelmesser-Einstellung, vielmehr läßt sich durch Lösen der Konus-Klemmbuchse und Verdrehen des ersten Rotors eine für alle Messer gleichermaßen genau übereinstimmende Einstellung erreichen.

Der Gegenstand der Erfindung wird nachstehend anhand eines in der Zeichnung dargestellten Ausführungsbeispiels näher beschrieben; in der Zeichnung zeigen:

Fig. 1 eine teilweise geschnittene Ansicht einer Zerkleinerungsvorrichtung, etwa nach Linie I-I in Fig. 2,

Fig. 2 einen Querschnitt durch die Vorrichtung, etwa nach Linie II-II in Fig. 1,

Fig. 3 eine der Fig. 1 entsprechende Teilansicht in vergrößerter Darstellung bei einer abgewandelten Ausführungsform,

Fig. 4 einen Querschnitt etwa nach Linie IV-IV in Fig. 3.

In einem Gehäuseteil 1 sind zwei Wellen 2 und 3 mit feststehendem Achsabstand drehbar gelagert. Auf den parallel zueinander angeordneten Wellen 2,3, die zweckmäßig, wie dargestellt, in horizontaler Ausrichtung ihrer Achsen vertikal übereinander angeordnet sind, sind zwei - scheibenförmige Rotoren 4 und 5 verdrehfest angebracht, wobei die gemäß zeichnerischer Darstellung obere Welle 2 den ersten Rotor 4 und die gemäß zeichnerischer Darstellung untere Welle 3 den zweiten Rotor 5 trägt. Die beiden Rotoren 4,5 sind gleichebenig zueinander angeordnet und werden für einen gegensinnigen Umlauf (in Richtung der Pfeile gemäß Fig. 1) synchron angetrieben.

Der Antrieb der beiden Rotoren 4,5 erfolgt über zwei miteinander kämmende Zahnräder 6 und 7, von denen das den ersten Rotor 4 antreibende Zahnrad 6 auf der Welle 2 verdrehfest aufsitzt und von einem Elektro-oder Hydro-Motor unmittelbar angetrieben wird oder mit der die Abfallstreifen erzeugenden Anlage antriebsmäßig gekoppelt ist. Zur Befestigung des Zahnrads 6 auf der Welle 2 ist zweckmäßig eine leicht lösbare Konus-Klemmbuchse 8 vorgesehen, so daß nach deren Lösen der Rotor 4 gegenüber dem Rotor 5 in Umfangsrichtung verstellbar ist und in der eingestellten Stellung auch wieder schnell und leicht fixiert werden kann.

Das mit dem Zahnrad 6 kämmende und den zweiten Rotor 5 antreibende Zahnrad 7 ist auf der Welle 2 frei drehbar gelagert und treibt diese über eine verdrehfest mit der Welle 3 verbundene Mitnehmerscheibe 9 an. Dazu sind an einer Seitenfläche des Zahnrads 7 axial vorstehende Bolzen 10 vorgesehen, die in der koaxial zum Zahnrad 7 liegenden Mitnehmerscheibe 9 befindliche Öffnungen 11 mit soviel Bewegungsspiel durchgreifen, daß zwischen dem Zahnrad 7 und der Mitnehmerscheibe 11 und damit zwischen Zahnrad 7 und Welle 3 eine begrenzte Relativbewegung in bezug auf die gemeinsame Drehrichtung stattfinden kann. Über Federn 12, die einenends jeweils an den Bolzen 10 und anderenends jeweils an von der Mitnehmerscheibe 9 vorstehenden Haltebolzen 13 angreifen, sind das Zahnrad 7 und die Mitnehmerscheibe 9 derart federelastisch gegeneinander verspannt bzw. abgestützt, daß eine vom Rotor 5 in unten noch näher erläuterter Weise kommende Drehwinkelverschiebung und die damit ausgelöste Relativbewegung zwischen Mitnehmerscheibe 9 und Zahnrad 7 jeweils elastisch aufgefangen bzw. ausgeglichen wird.

Am Umfang des ersten Rotors 4 sind mehrere Flachmesser 14 lösbar angebracht, z.B. mittels Halteschrauben 15 und Druckschrauben 16 angeschraubt. In Drehrichtung vor jedem Flachmesser 14 ist vorteilhaft jeweils ein aus Gummi, Kunststoff od.dgl.bestehendes und damit elastisches Niederhaltekissen 17 auswechselbar angebracht, das die Breite bzw. Dicke des Rotors 4 besitzt und einen vor dem jeweiligen Flachmesser befindlichen Umfangsbereich des Rotors 4 bildet.

Am Umfang des zweiten Rotors 5 ist eine der Anzahl der Flachmesser 14 am ersten Rotor 4 entsprechende Zahl von Rundmessern 18 lösbar angebracht, z.B. mittels versenkter Imbusschrauben 19. Die Rundmesser 18 bilden eine zur Radialen des Rotors 5 rechtwinklig verlaufende Schneidfläche 20 aus, die mit der quer zur Drehrichtung verlaufenden Schneidkante 21 der Flachmesser 14 am Rotor 4 einen sich schließenden Schnittspalt und damit einen Scherenschnitt zum Abscheren eines dazwischen befindlichen Abfallstreifens 22 erzeugt. Zur Erzielung eines ziehenden Scherenschnitts ist die Schneidfläche 20 der Rundmesser 18, wie aus Fig. 2 ersichtlich, mit einer zur Achse des Rotors 5 hin konvergierenden Schrägneigung versehen, so daß sich zwischen der Schneidkante 21 des Flachmessers 14 und der Schneidfläche 20 des Rundmessers 18 ein Schnittwinkelα von z.B. 8° ergibt.

Zweckmäßig sind am ersten Rotor 4 vier Flachmesser 14 und dementsprechend auch am zweiten Rotor 5 vier Rundmesser 18 vorgesehen, die jeweils miteinander zusammenwirken, so daß bei jedem Umlauf der Messer-Rotoren 4,14 und 5,18 jeweils vier Schnittestattfinden. Je nach Durchmesser der Messer-Rotoren und der gewünschten Länge der vom Abfallband bzw. -streifen abzutrennenden Abschnitte können die Rotoren auch mit einer größeren oder kleineren, untereinander selbstverständlich jeweils gleichen Zahl von Messern bestückt sein.

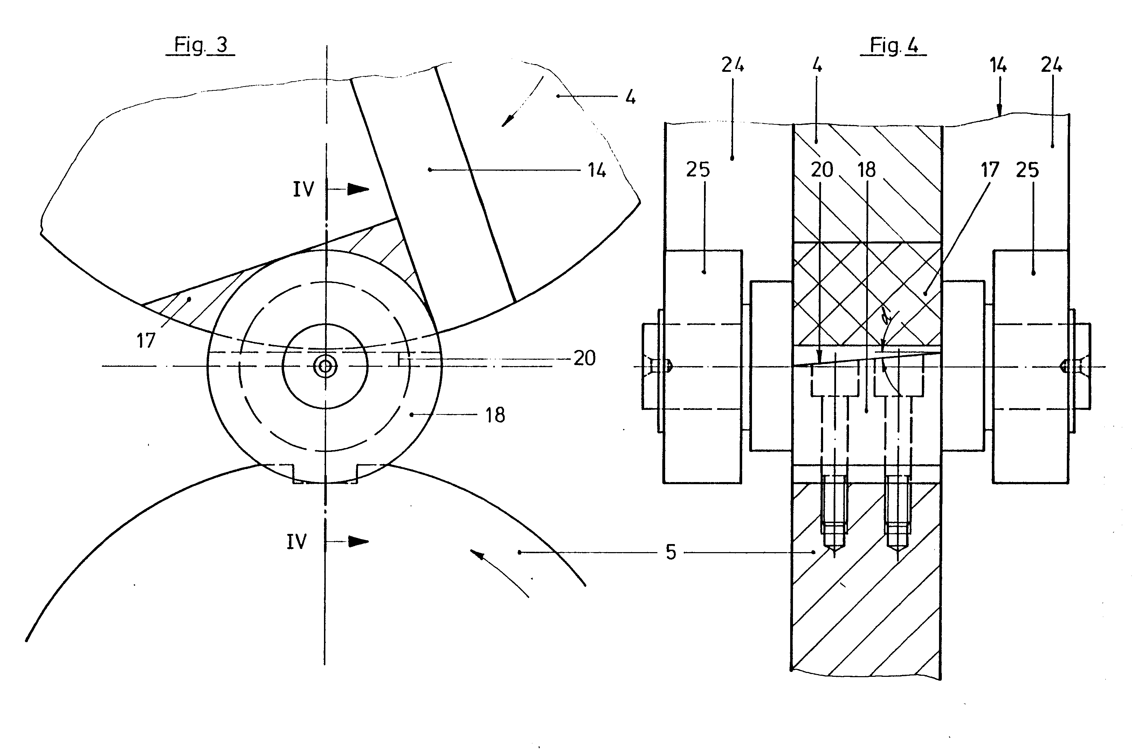

Die Rundmesser 18 am zweiten Rotor 5 sind seitlich mit ihre Schneidfläche 20 überragenden Anlaufstützen versehen, die dafür sorgen, daß das jeweils zugehörige Flachmesser 14 vor und während des Schnittes am Rundmesser abgestützt wird und sich mit einer Relativbewegung an dessen Rückseite entlang bewegt, wenn die beiden Messer 14,18 infolge des gegensinnigen Umlaufs der Rotoren 4,5 in gleichgerichteter Bewegung zusammentreffen. Bei der Ausführung nach Fig. 1 u. 2 sind die Anlaufstutzen von halbkreisförmig über die Schneidfläche 20 der Rundmesser 18 nach oben hochstehenden festen Ansätzen 23 gebildet, an denen das jeweils zugehörige Flachmesser 14 mit seitlichen Überständen 24 vor und während des Schnittes bereichsweise entlang gleitet. Bei der Ausführung nach Fig. 3 u. 4 sind die Anlaufstützen von seitlich an den Rundmessern 18 frei drehbar angebrachten Rollen 25 gebildet, auf denen sich das jeweils zugehörige Flach ser 14 mit seitlichen Überständen 24 abwälzt, so daß es keine gleitende Reibung an den Anlaufstützen gibt. Die Rollen 25 können aus Stahl bestehen oder aber auch aus festem Kunststoff, was eine noch weitere Geräuschdämpfung bewirken kann.

Die Funktion ist wie folgt: Das zu zerkleinernde Abfallband 22 wird über einen zweckmäßig vorgesehenen Zuführungstrichter 26 annähernd horizontal ausgerichtet zwischen die beiden Messerrotoren 4,14 und 5,18 eingeführt und durch deren Drehbewegung zwischen die Messer 14,18 eingezogen und dann von dem gegen das Rundmesser 18 des zweiten Rotors 5 arbeitende Flachmesser 14 des ersten Rotors 4, wie oben beschrieben, im Scherenschnitt abgeschert. Die sich durch den Anlauf des Flachmessers 14 an das Rundmesser 18 ergebende Drehwinkelverschiebung zwischen dem Rotor 4 und dem Rotor 5 wird über die federelastische Abstützung zwischen dem Zahnrad 7 und der Mitnehmerscheibe 9 abgefangen bzw. ausgeglichen, so daß zwischen den beiden Messern 14,18 keine Schnittluft entsteht. Außerdem wird durch den federelastischen Ausgleich der sich beim Anlauf des Flachmessers 14 des ersten Rotors 4 gegen das Rundmesser18 des zweiten Rotors 5 ergebenden Drehwinkelverschiebung das Abscheren von Abfallbändern 22 unterschiedlicher Dicke bzw. Stärke, z.B. in einem Bereich von 0,5 bis 5 mm, erreicht, ohne daß es eines Umstellens der Messer an den Rotoren bedarf.

Durch den stattfindenden Scherenschnitt wird in Verbindung mit den den Flachmessern 14 am ersten Rotor 4 vorgeordneten federnden Niederhaltekissen 17, welche zum Vorziehen des Abfallstreifens sowie zum Niederhalten des abgescherten Abfallabschnitts dienen, ein fast lautloser Schnitt erzeugt.

<u>Auflistung der Bezugszahlen</u>

1 Gehäuseteil
2 Welle (oben)
3 Welle (unten)
4 erster Rotor
5 zweiter Rotor
6 Zahnrad (oben)
7 Zahnrad (unten)
8 Konus-Klemmbuchse
9 Mitnehmerscheibe
10 Bolzen (am Zahnrad 7)
11 Öffnungen (i.d. Mitnehmerscheibe 9)
12 Federn
13 Haltebolzen (a.d. Mitnehmerscheibe 9)
14 Flachmesser
15 Halteschrauben
16 Druckschrauben
17 Niederhaltekissen
18 Rundmesser
19 Imbusschrauben
20 Schneidfläche (d. Rundmesser 18)
21 Schneidkante (d. Flachmesser 14)
22 Abfallband bzw. -streifen
23 hochstehende Seitenansätze (a.d. Rundmessern 18)
24 Seitenüberstände (a.d. Flachmessern 14)
25 Abwälzrollen (a.d. Rundmessern)
26 Zuführungstrichter

## Ansprüche

1. Vorrichtung zum Zerkleinern von band-bzw. streifenförmigen Abfällen aus z.B. Stahlblech in kurze Abschnitte, dadurch gekennzeichnet,
-daß sie zwei synchron gegenläufig angetriebene Rotoren (4,5) mit jeweils am Umfang vorstehenden Messern (14,18) aufweist, die beim jeweiligen Zusammentreffen einen Scherenschnitt ausführen, und
-daß zum Antrieb der auf Wellen (2,3) mit feststehendem Achsabstand verdrehfest angebrachten Messer-Rotoren (4,1418) zwei miteinander kämmende Zahnräder (6,7) vorgesehen sind, von denen eines (6) auf der Welle (2) des ersten Rotors (4) aufsitzt und diese mitnimmt, während das andere (7) auf der dem zweiten Rotor (5) zugehörigen Welle (3) frei drehbar gelagert ist und diese Welle über eine in Drehrichtung federelastisch abgestützte Mitnahmemechanik (9 bis 13) antreibt.

2. Vorrichtung nach Anspruch 1, dadurch gekennzeichnet, daß die Messer am ersten Rotor (4) als Flachmesser (14) und die Messer am zweiten Rotor (5) als Rundmesser (18) ausgebildet sind.

3. Vorrichtung nach Anspruch 1 oder 2, dadurch gekennzeichnet, daß die Mitnahmemechanik eine mit der Welle (3) des zweiten Rotors (5) verdrehfest verbundene, koaxial zum Zahnrad (7) angeordnete und mit einer Mehrzahl von Öffnungen (11) versehene Mitnehmerscheibe (9) umfaßt, deren Öffnungen von axial vom Zahnrad (7) vorstehenden Bolzen (10) mit Bewegungsspiel durchgriffen werden, so daß zwischen Zahnrad (7) und Mitnehmerscheibe (9) in bezug auf die gemeinsame Drehrichtung eine begrenzte Relativbewegung ermöglicht ist, die über jeweils zwischen den Bolzen (10) des Zahnrads (7) und Haltebolzen (13) der Mitnehmerscheibe gespannte Federn (12) ausgeglichen wird.

4. Vorrichtung nach einem der Ansprüche 1 bis 3, dadurch gekennzeichnet, daß in Drehrichtung vor jedem der Flachmesser (14) des ersten Rotors (4) ein aus Gummi, Kunststoff od.dgl. bestehendes elastisch nachgiebiges Niederhaltekissen (17) angeordnet ist.

5. Vorrichtung nach einem der Ansprüche 1 bis 4, dadurch gekennzeichnet, daß die Schneidflächen (20) der Rundmesser (18) am zweiten Rotor (5) mit einer zu dessen Achse konvergierenden, einen Winkel α zur horizontalen ausbildenden Schrägneigung versehen sind.

6. Vorrichtung nach einem der Ansprüche 1 bis 5, dadurch gekennzeichnet, daß das auf der Welle (2) des ersten Rotors (4) aufsitzende Zahnrad (6) mit einer Konus-Klemmbuchse (8) auf der Welle verstellbar aufsitzt.

7. Vorrichtung nach einem der Ansprüche 1 bis 6, dadurch gekennzeichnet, daß unmittelbar vor den beiden Messer-Rotoren (4,1418) ein den Abfallstreifen (22) ausrichtender Zuführungstrichter (25) vorgesehen ist.

8. Vorrichtung nach einemder Ansprüche 1 bis 7, dadurch gekennzeichnet, daß die Rundmesser (18) seitlich mit ihre Schneidfläche (20) überragenden Anlaufstützen (23; 25) für das jeweils zugehörige Flachmesser (14) versehen sind.

9. Vorrichtung nach Anspruch 8, dadurch gekennzeichnet, daß die Anlaufstützen von halbkreisförmigen Ansätzen (23) der Rundmesser (18) gebildet sind, an denen das jeweils zugehörige Flachmesser (14) vor und während des Schnittes bereichsweise entlang gleitet.

10. Vorrichtung nach Anspruch 8, dadurch gekennzeichnet, daß die Anlaufstutzen von an den Rundmessern (18) frei drehbar angebrachten Rollen (25) gebildet sind, auf denen sich das jeweils zugehörige Flachmesser (14) vor und während des Schnittes bereichsweise abwälzt.

Fig. 1

Fig. 2

16

14

15

17

26

18

21

20

19

23

5

II

II

8

2

6

1

9

11

13

12

3

10

7

4

24

17

23

22

18

5

α

I

I

0 226 859

Fig. 3

Fig. 4

0 226 859

# EUROPÄISCHER RECHERCHENBERICHT

Europäisches
Patentamt

Nummer der Anmeldung

EP 86 11 6415

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 524 390 (SIEFVERT-FORNANDER) * Insgesamt * | 1,4,5 | B 23 D 33/00 // B 23 D 25/12 |
| | --- | | |
| A | DE-C- 564 362 (KRUPP) * Insgesamt * | 7 | |
| | --- | | |
| A | FR-A- 812 172 (QUESTER) * Insgesamt * | 8,9 | |
| | --- | | |
| A | FR-A- 860 091 (CAMPBELL) | | |
| | --- | | |
| A | GB-A-2 122 529 (VENABLES) | | |
| | ----- | | |

### RECHERCHIERTE SACHGEBIETE (Int. Cl.4)

B 23 D
B 26 D

Der vorliegende Recherchenbericht wurde für alle Patentansprüche erstellt.

| Recherchenort DEN HAAG | Abschlußdatum der Recherche 25-03-1987 | Prüfer BERGHMANS H.F. |
|---|---|---|